(19) Europäisches Patentamt
European Patent Office
Office européen des brevets

(11) Veröffentlichungsnummer: **0 116 852**
**A2**

(12) # EUROPÄISCHE PATENTANMELDUNG

(21) Anmeldenummer: 84100421.1

(22) Anmeldetag: 17.01.84

(51) Int. Cl.³: C 09 D 3/66
C 09 D 5/38, B 05 D 7/16

(30) Priorität: 20.01.83 DE 3301729

(43) Veröffentlichungstag der Anmeldung:
29.08.84 Patentblatt 84/35

(84) Benannte Vertragsstaaten:
BE DE FR GB IT SE

(71) Anmelder: HOECHST AKTIENGESELLSCHAFT
Postfach 80 03 20
D-6230 Frankfurt am Main 80(DE)

(72) Erfinder: Dürr, Helmut, Dr.
Hansaallee 111
D-6000 Frankfurt am Main(DE)

(72) Erfinder: Esser, Klaus
Habichtsthaler weg 8
D-8752 Heinrichsthal(DE)

(72) Erfinder: Kraft, Kurt
Im Hopfengarten 16
D-6200 Wiesbaden(DE)

(72) Erfinder: Plath, Dieter, Dr.
Hildastrasse 32
D-6200 Wiesbaden(DE)

(54) **Bindemittelmischung und deren Verwendung zur Herstellung von einer Zweischichten-Metallic-Lackierung.**

(57) Bindemittelmischung zur Herstellung von wasserfreien Basis-Metallic-Lacken mit hohem Festkörpergehalt auf Basis eines Reaktionsproduktes aus mindestens einem, seitlich angeordnete OH-Gruppen enthaltenden, gesättigten oder olefinisch-ungesättigten Polyester and/oder Polymerisationsprodukt mit einer OH-Zahl von 30 - 180, einem Trimellithsäureeinheiten enthaltenden Polycarbonsäureanhydridgemisch, mindestens einem epoxidierten Öl und organischen Basen, Metallpulver, Lösungsmittel, gegebenenfalls Pigmente und/oder Farbstoffe sowie gegebenenfalls weiteren üblichen Zusätzen, mit der Maßgabe, daß ein Gehalt an Celluloseacetobutyrat das im vorliegenden Falle nur als Verlaufmittel dient, höchstens 3 %, bezogen auf den Feststoffgehalt beträgt, sowie die Verwendung der Bindemittelmischung zusammen mit einem Decklack zur Herstellung einer Zweischichten-Metallic-Lackierung.

Der Basis-Metallic-Lack weist neben einem bisher nicht erreichbaren Festkörpergehalt von bis zu 50 Gew.-%, einen sehr guten Metallic-Effekt bei besserer Reproduzierbarkeit sowie sehr gute physikalische und mechanische Eigenschaften auf.

EP 0 116 852 A2

Croydon Printing Company Ltd

Bindemittelmischung und deren Verwendung zur Herstellung von einer Zweischichten-Metallic-Lackierung

Metallic-Lacke haben in den letzten Jahren in der Automobilindustrie sehr an Bedeutung gewonnen. Während früher noch ein großer Teil der Karosserien mit Einschicht-Metallic-Lacken versehen wurde, werden heute Automobile praktisch ausschließlich nach dem Zweischicht-Metallic-Verfahren, dem sogenannten "Naß-in-Naß-Verfahren", lackiert. Bei diesem Verfahren wird zuerst ein im wesentlichen physikalisch trocknender Basislack, der mit Aluminium, eventuell unter Zusatz anderer farbgebender Pigmente pigmentiert ist, und anschließend nach kurzer Ablüftung ein Klarlack als Decklack aufgebracht. Der Basislack besteht hauptsächlich aus Lösungsmittel, einem physikalisch trocknenden Bindemittel wie Celluloseacetobutyrat (CAB), einem ölfreien Polyester, Melaminharz und Pigmenten. Dabei hat das CAB einen erheblichen Fortschritt hinsichtlich einer schnellen physikalischen Trocknung des Lackes gebracht. Jedoch ist die Verträglichkeit der Lackkomponenten mit CAB nicht immer gegeben: es treten auch zuweilen Löslichkeits- und Viskositätsprobleme auf. Als Pigmente finden außer Aluminium sowohl anorganische wie Titandioxid, Bleichromat, Eisenoxide als auch organische Pigmente wie Phthalocyanine, Chinacridone und/oder halogenierte Thioindigo-Pigmente Verwendung. Der Festkörpergehalt der Basislacke, der meist um 15 % liegt, ist sehr niedrig. Der Rest ist flüchtiges Lösungsmittel, das sich zum größten Teil aus Estern wie Äthylenglykolmonoäthylacetat, Butyl- und Äthylacetat und Aromaten, wie Toluol oder Xylol, zusammensetzt.

Als zweite Schicht wird nach einer Ablüftungszeit von nur wenigen Minuten ein Klarlack aufgetragen, der ein lufttrocknender Lack sein kann, wie etwa im Falle der Reparatur einer Karosserie, oder ein Einbrennlack, wie er bei der Autolackierung am Band Verwendung findet. Im letzten Fall werden beide Lackschichten unter den üblichen Einbrennbedingungen (10 - 30 min bei 120 - 150°C) zusammen ausgehärtet.

Der hohe Anteil an Lösungsmittel im Basislack stellt eine beachtliche Belastung für die Umwelt dar und verursacht darüber hinaus auch entsprechende Kosten, d.h. die Mehrbelastung durch Verwendung von Lösungsmittel und ihre umweltschonende Beseitigung.

Es hat deshalb nicht an Versuchen gefehlt, den Festkörpergehalt anzuheben bzw. den Anteil an flüchtigen Lösungsmitteln zu reduzieren. Dabei wurde festgestellt, daß Lacke mit einem erhöhten Festkörpergehalt eine zu hohe Viskosität aufweisen, zu schwer aufzutragen sind und zu Lackschichten mit unbefriedigenden anwendungstechnischen Eigenschaften führen. Daher ist dieser Weg zur Herstellung eines umweltfreundlicheren und durch den höheren Festkörpergehalt ergiebigeren und damit wirtschaftlicheren Metallic-Basislackes nicht gangbar.

In der DE-A- 29 26 584 werden wasserverdünnbare Basis-Metallic-Lacke beschrieben, die einen ähnlichen Aufbau wie die vorliegenden Lacke aufweisen und ebenfalls Lackschichten mit sehr guten anwendungstechnischen Eigenschaften ergeben. Der Festkörpergehalt derartiger Lacke beträgt im allgemeinen ca. 15 Gew.-%. Zum anderen gibt es Anwendungsgebiete, in denen keine wasserverdünnbaren Lacke, sondern nur lösungsmittelhaltige Lacke eingesetzt werden. So haben sich wäßrige Basislack-Systeme in der Autoindustrie noch nicht durchsetzen können.

Es zeigte sich überraschenderweise, daß diese, für das wäßrige System beschriebene Bindemittelmischung auch in lösungsmittelhaltigen Basislack-Systemen zu guten Ergebnissen führt, vor allen Dingen ermöglicht es die Entwicklung von CAB-freien Basislacken. Die Aufgabe zur Verbesserung der bisher eingesetzten Lacke besteht also noch immer.

Gegenstand der Erfindung ist eine Bindemittelmischung zur Herstellung von wasserfreien, festkörperreichen Basis-Metallic-Lacken auf Basis

A) eines Reaktionsproduktes aus
   a) mindestens einem, seitlich angeordnete OH-Gruppen enthaltenden, gesättigten oder olefinisch ungesättigten Polyester und/oder Polymerisationsprodukt, jeweils mit einer OH-Zahl von 30 - 180,
   b) einem Trimellithsäureeinheiten enthaltenden Polycarbonsäureanhydridgemisch, wobei das Festkörperverhältnis der Komponente a) zu b) 50 : 50 bis 90 : 10 beträgt,
   c) mindestens einem epoxidierten Öl und
   d) mindestens einer organischen Base,
B) Metallpulver,
C) Lösungsmittel,
D) gegebenenfalls Pigmenten und/oder Farbstoffen sowie
E) gegebenenfalls weiteren üblichen Zusätzen, mit der Maßgabe, daß ein Gehalt an Celluloseacetobutyrat höchstens 3 %, bezogen auf den Feststoffgehalt beträgt.

Gegenstand der Erfindung ist außerdem die Verwendung der Bindemittelmischung zur Herstellung einer Zweischichten-Metallic-Lackierung aus einem festkörperreichen Basislack und einem Decklack.

Es war überraschend und nicht vorherzusehen, daß der Harzanteil von Bindemittelmischungen, der einen so hohen Anteil an Carboxylgruppen besitzt, daß bei der Neutralisation mit Basen wasserlösliche bzw. wasserverdünnbare d.h. hydrophile salzartige Verbindungen entstehen, sich in wasserfreien Systemen, d.h. in Lösungsmitteln störungsfrei verarbeiten läßt. Weiterhin war es nicht vorhersehbar, daß es mit der erfindungsgemäßen Bindemittelmischung möglich ist, einen Basis-Metallic-Lack herzustellen, der einen bisher nicht erreichbaren Festkörpergehalt von bis zu 50 Gew.-% aufweist,

 0116852

rasch trocknet, einen sehr guten Metallic-Effekt bei besserer Reproduzierbarkeit, eine ausgezeichnete Zwischenhaftung, sowie eine deutliche Verbesserung der Steinschlagfestigkeit gegenüber handelsüblichen CAB-haltigen Metallic-Lacken erzielt. Die Bindemittelmischungen besitzen eine hervorragende Lagerstabilität und verhalten sich hinsichtlich Vergrauung und Umweltbelastung einwandfrei.

Trotz des hohen Festkörpergehalts besitzt der Basis-Metallic-Lack eine niedrige Viskosität, so daß er sich ohne Schwierigkeiten unter Ausbildung eines einwandfreien Metalleffekts verarbeiten läßt. Infolge der schnellen Trocknung tritt kein Ablaufen an senkrechten Flächen und keine Wolkenbildung ein. Weiterhin kann der Basislack schon nach wenigen Minuten Trocknung bei Raumtemperatur ohne Schwierigkeiten überlackiert werden, d. h. es findet keine Anlösung des angetrockneten Basislackes durch den später aufgetragenen Decklack statt. Im allgemeinen beträgt die Ablüftzeit 2 bis 10, vorzugsweise 3 - 6 Minuten bei 15 bis 30, vorzugsweise 20 bis 25°C, nach der die Basislackschicht überlackierbar ist.

Als Decklack eignen sich konventionelle Lacksysteme wie Zweikomponentenlacke, Einbrennlacke, auch wasserlösliche oder wasserverdünnbare Lacke sowie Pulverlacke.

Bei der Umsetzung der Komponente a) mit der Komponente b) wird ein Reaktionsprodukt der Formel (I) (siehe Formelblatt) erhalten, in der

$R^1$ den Rest eines, seitlich angeordnete OH-Gruppen enthaltenden, Kondensationsproduktes aus Polycarbonsäuren und mehrwertigen Alkoholen und/oder den Rest eines, seitlich angeordnete OH-Gruppen enthaltenden, Polymerisationsproduktes aus α,ß-olefinisch ungesättigten monomeren Verbindungen,

$R^2$ Polycarbonsäureeinheiten der Formel (II) (s. Formelblatt) in der m Null oder eine ganze Zahl von 1 bis 6 ist sowie R gleich oder verschieden ist und ein 2- bis 6-wertiger, vorzugsweise 2-wertiger geradkettiger oder verzweigter Kohlenwasserstoffrest mit insgesamt 2 bis 12, vorzugsweise 2 bis 6 C-Atomen, der gegebenenfalls bis zu zwei olefinische Doppelbindungen aufweist oder durch bis zu drei Ätherbrücken unterbrochen ist,

$R^3$ eine OH-Gruppe und/oder einen Trimellithsäurerest

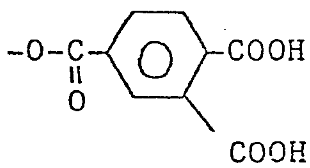

darstellt und/oder die Bedeutung von $R^2$ besitzt, wobei in $R^2$ und $R^3$ gegebenenfalls anstelle der benachbarten freien Carboxylgruppen auch eine intramolekulare Anhydridgruppe vorliegt.

Geeignete Polyester der Komponente a) können aus Polycarbonsäuren wie Phthal-, Isophthal-, Terephthal-, Trimellith-, Fumar-, Malein-, Endomethylentetrahydrophthal-, Bernstein-, Adipin-, Kork-, Azelain-, Sebacinsäure, alkylsubstituierten Derivaten dieser Säuren sowie deren möglichen Anhydriden hergestellt werden. Geeignete Alkoholkomponenten der Polyester sind mehrwertige Alkohole, wie Äthylenglykol, die Propandiole, Butandiole, Pentandiole, wie Neopentylglykol, Hexandiole, Diäthylenglykol, Glycerin, Trimethyloläthan, Trimethylolpropan, Pentaerythrit und Dipentaerythrit. Die genannten Säuren und Alkohole können teilweise durch Monocarbonsäuren bzw. einwertige Alkohole in üblicher Weise ersetzt sein. Die Komponenten sowie die Polyester können jeweils einzeln oder im Gemisch eingesetzt werden.

Als Komponente a) sind weiterhin geeignet Polymerisationsprodukte, die z.B. durch Copolymerisation von olefinisch ungesättigten monomeren Verbindungen, von denen mindestens eine auch Hydroxylgruppen enthalten muß, hergestellt werden. Beispiele für derartige Verbindungen sind polymerisierbare Ester organischer Säuren mit 2 - 20 C-Atomen wie Vinylester, z. B. Vinylacetat, Vinylpropionat, Vinylbutyrat, Vinylisobutyrat, Vinylbenzoat, Ester der Acryl- und Methacrylsäure mit einwertigen Alkoholen mit 1 bis 10 C-Atomen wie Methyl-, Äthyl-, die verschiedenen Propyl-, Butyl-, Hexyl- sowie Octyl-(z.B. 2-Äthylhexyl-) acrylate und -methacrylate, die Dialkylester der Malein- und Fumarsäure wie Dimethyl-, Diäthyl- und Diallylmaleat bzw. -fumarat. Mischpolymerisierbare äthylenisch ungesättigte hydroxylgruppenhaltige Monomere sind z. B. Hydroxyalkylacrylate und -methacrylate wie 2-Hydroxyäthyl-, 2-Hydroxypropyl-, 3-Hydroxypropyl-, und 4-Hydroxybutylacrylat oder -methacrylat. Es können auch Mischungen der genannten Ester eingesetzt werden. Geeignet sind ferner äthylenisch ungesättigte monolefinische Kohlenwasserstoffe wie Styrol, α-Methylstyrol, Vinyltoluol. Die Verbindungen der Komponente a) besitzen bevorzugt OH-Zahlen im Bereich von 50 bis 130.

Geeignete Trimellithsäureeinheiten enthaltende Polycarbonsäureanhydridgemische (Komponente b) sind z.B. solche, die Verbindungen der Formeln (III) und/oder (V) (siehe Formelblatt) enthalten und in der DE-A-27 07 018.4 offenbart sind. Formel (IV) zeigt eine Ausgestaltung der Formel (III), in der z Null ist. In den Formeln (III) bis (V) hat R die oben angegebene Bedeutung, y ist eine ganze Zahl von 2 bis 6, t ist eine ganze Zahl von 1 bis 5 und z und u sind Null oder eine ganze Zahl von 1 bis 5.

In den nur linear, d.h. für zweiwertige Reste R wiedergegebenen Formeln (II) bis (V) können auch Verzweigungen, z.B. durch eine höhere Wertigkeit von R vorliegen. Derartige verzweigte Polycarbonsäureanhydride lassen sich durch eine einzige Formel nicht ohne weiteres darstellen.

Wenn aufgrund der möglichen höheren Wertigkeit von R, z.B. mehr als 2, die Verbindungen (III) bis (V) verzweigt sind, können in den verschiedenen Zweigen die Indices x, y und z gleich oder verschieden sein. Verbindungen der Formel (III) sind z.B. mehrere Estergruppen aufweisende Polyanhydride der Trimellithsäure mit mehrwertigen, beispielsweise 2- bis 6-wertigen gesättigten oder ungesättigten Alkoholen mit 2 bis 12 C-Atomen, einschließlich solchen mit bis zu 3 Äthergruppen. Geeignete Alkohole für die Herstellung dieser Verbindungen sind z. B. die bereits oben genannten Diole, sowie deren höhere Homologen bzw. ihre olefinisch ungesättigten Analogen, z.B. Butendiole, ferner weitere Oligomere des Äthylenglykols, sowie die oben genannten höherwertigen Alkohole, wobei die Diole bevorzugt sind.

Bevorzugte Verbindungen der Formeln (III), (IV) und (V) sind solche, in denen R zweiwertig ist, aber je nach der Struktur und Wertigkeit des Ausgangsalkohols, auch verzweigt sein kann.

Bevorzugt werden als typische Reste R z.B. $-(CH_2)_n-$, worin n = 2 bis 10, vorzugsweise 2 bis 4 ist, $-CH_2-\underset{\overset{|}{CH_3}}{CH}-$ und $-CH_2-CH_2-O-CH_2-CH_2-$ angesehen.

Die Verbindungen der Formel (IV) sind also, wenn y = 2 ist, Diestertetracarbonsäureanhydride und, wenn y = 3 ist, Triesterhexacarbonsäureanhydride. Die Verbindungen der Formel (V) stellen beispielsweise oligomere Polycarbonsäureanhydride mit mehreren Estergruppen dar.

Die Verbindungen der Formeln (III) bis (V) lassen sich z. B. durch Umsetzung von Trimellithsäureanhydrid mit den entsprechenden zwei- und/oder höherwertigen Alkoholen in üblicher Weise herstellen.

Durch eine zumindest partielle Additionsreaktion der Komponente b) an die seitlich angeordneten OH-Gruppen der Verbindungen der Komponente a) wird ein Additionsprodukt (I) erhalten, dessen restliche Anhydridgruppen anschließend ganz oder teilweise hydrolysiert werden können. Dies kann in Gegenwart oder Abwesenheit von Lösungsmitteln erfolgen. Wird in Gegenwart eines Lösungsmittels hydrolysiert, so kann man durch vorsichtiges Abdestillieren, gegebenenfalls unter vermindertem Druck, auch lösungsmittelfreie Reaktionsgemische a) und b) erhalten. In vielen Fällen ist es aber vorteilhaft, ein Lösungsmittelgemisch so zu wählen, daß man für die Weiterverarbeitung geeignete Lösungen der Verbindungen erhält. Besonders einfach gestaltet sich die Hydrolyse, wenn zu einer Schmelze oder einer Lösung eines Reaktionsgemisches bei erhöhter Temperatur die für die Hydrolyse erforderliche Wassermenge gegeben wird. Zur Vervollständigung der Hydrolyse wird noch einige Zeit bei dieser Temperatur nachgerührt. Bei der Hydrolyse werden aber nicht nur die verbliebenen Anhydridgruppen der mit der Komponente a) umgesetzten Verbindungen der Formeln (III) bis (V) hydrolysiert, vielmehr erfolgt auch die Hydrolyse der nicht umgesetzten Anhydride gemäß Formel (III) bis (V) sowie des Trimellithsäureanhydrids, die im Reaktionsgemisch gegebenenfalls vorhanden sind.

Geeignete Lösungsmittel für die Durchführung der genannten Reaktionen sind beispielsweise Äthylenglykolmonobutylätheracetat, Butylacetat, Methylisobutylketon oder Mischungen daraus oder solche mit aromatischen Kohlenwasserstoffen wie Toluol und Xylol, z. B. aus Äthylenglykolmonobutylätheracetat und Xylol, z. B. im Verhältnis 1 : 1 bis 1 : 3.

Zur Charakterisierung der Anhydridgruppen enthaltenden Gemische der Formeln (III) bis (V) eignet sich insbesondere die Gel-Permeations-Chromatographie (GPC) an mit Divinylbenzol vernetztem Polystyrolgel als Sorptionsmittel und mit Tetrahydrofuran als Elutionsmittel. Mit dieser Methode

gelingt es, die Anhydridgemische in ihren Einzelkomponenten genau zu bestimmen, so daß der jeweilige Anteil der einzelnen Komponenten leicht und genau eingestellt werden kann. So lassen sich die Verbindungen der Formeln (III) bis (V) nach ihrer Struktur und Menge genau erfassen.

Für die Umsetzung der Komponenten a) und b) können die Anhydride der Formeln (III) bis (V) als solche eingesetzt werden. Vorzugsweise wird ein Anteil an Trimellithsäureanhydrid mitverwendet, das mit in die Verbindung der Formel (I) eingebaut werden kann. Im allgemeinen setzt man vorteilhaft ein Bis-Anhydrid ein, das durch Umesterung aus Äthylenglykol und/oder Propandiol-1,2 und/oder Diäthylenglykol und Trimellithsäureanhydrid hergestellt worden ist, das neben Trimellithsäureanteilen noch die oligomeren Anhydride der Formel (V) enthalten kann.

Zweckmäßig beträgt in der Komponente b) der Gehalt an Verbindungen der Formeln (III) bis (V) 70 bis 99,8, vorzugsweise 80 bis 95 Gew.-% und derjenige an Trimellithsäureeinheiten 0,2 bis 30, vorzugsweise 5 bis 20 Gew.-%.

Der Gehalt an oligomeren Polycarbonsäureanhydriden (Formel (V)) innerhalb des Gemisches der Verbindungen der Formeln (III) bis (V) kann zwischen 0,1 und 99,8, vorzugsweise zwischen 30 und 70 Gew.-% liegen. Außerdem können die Polycarbonsäureanhydride aus Mischungen von Einzelkomponenten mit unterschiedlichen Resten und Indices y, z, t und u bestehen.

Sehr wichtig ist das Mischungsverhältnis von OH-gruppenhaltiger Verbindung a) zum Polycarbonsäureanhydridgemisch b). Im allgemeinen hat sich ein Festkörperverhältnis der Komponenten a) zu b) von 50 : 50 bis 90 : 10, vorzugsweise 60 : 40 bis 85 : 15, im speziellen jedoch 65 : 35 bis 75 : 25, bewährt.

Als Komponente c) werden epoxydierte Öle, z. B. solche auf Basis von Soja-, Lein-, Tall- und/oder Ricinenöl mit einem Epoxyäquivalent jeweils von 100 bis 360, insbesondere von 150 bis 275 eingesetzt. Die Epoxydgruppen der Komponente c) reagieren unter Esterbildung mit den COOH-Gruppen der aus den Komponenten a) und b) erhaltenen Reaktionsgemische. Das Verhältnis des freien Carboxylgruppenäquivalents dieses Reaktionsgemisches zu dem Epoxydgruppenäquivalent der Komponente c) beträgt im allgemeinen 3 : 1 bis 1 : 3, vorzugsweise 1,25 : 1 bis 1 : 1,25; insbesondere werden bis zu 98 % der Carboxylgruppen mit den Epoxydgruppen umgesetzt.

Als organische Basen d) dienen aliphatische sekundäre und/oder tertiäre Amine wie Trimethyl-, Triäthyl- und Tripropylamin. Auch können gemischt-substituierte Basen, z.B. N,N-Dimethyl-cyclohexylamin, N-Methyl-morpholin, sowie hydroxylgruppenhaltige Basen, z.B. Diisopropanolamin, N,N-Dimethyl- und N,N-Diäthylaminoäthanol verwendet werden. Die verwendete Basenmenge beträgt im allgemeinen 50 bis 120 Gew.-%, vorzugsweise 55 bis 100 Gew.-%, bezogen auf die zur Neutralisation der im Bindemittelgemisch vorhandenen freien Carboxylgruppen.

Als Komponente B) werden Metallpulver einzeln oder im Gemisch wie Kupfer, Kupferlegierungen, Aluminium und Stahl, vorzugsweise Aluminiumpulver in wenigstens überwiegendem Anteil eingesetzt, und zwar im allgemeinen 0,1 - 50, vorzugsweise 0,8 bis 15, im besonderen 1 bis 8 Gew.-%, bezogen auf Bindemittel.

Als Lösungsmittel C), die in der Lackindustrie üblicherweise verwendet werden, können höhere Alkohole mit z.B. 4 - 8 C-Atomen, wie Butanol, Isobutanol, die verschiedenen Pentanole, Hexanole und Octanole, ferner aliphatische und aromatische Kohlenwasserstoffe wie Benzinschnitte, Toluol, die verschiedenen Xylole, Ketone, z.B. Aceton, Methyläthylketon,

Methylisobutylketon, Cyclohexanon, weiterhin Ester wie Äthyl-, Propyl-, Butyl- und Amylacetat, Ester von Glykoläthern, z.B. Äthylenglykolmonoäthyl- oder -butyläther eingesetzt werden.

Als Farbstoffe bzw. Pigmente (Komponente D), die anorganischer oder organischer Natur sein können, werden beispielsweise genannt Titandioxid, Graphit, Ruß, Zinkchromat, Strontiumchromat, Bariumchromat, Bleichromat, Bleicyanamid, Bleisilicochromat, Calciummolybdat, Manganphosphat, Zinkoxid, Cadmiumsulfid, Chromoxid, Zinksulfid, Nickeltitangelb, Chromtitangelb, Eisenoxidrot, Eisenoxidschwarz, Ultramarinblau, hochlicht- und wetterechte organische Pigmente wie Chinacridon-, Perylen-, Phthalocyaninkomplex-, Thioindigo- und Benzimidazolon-Pigmente oder dergleichen. Ihr Anteil wird so gewählt, daß der gewünschte Metallic-Effekt nicht unterdrückt wird.

Die eingesetzten Mischungen können auch weitere übliche Zusätze E) wie Füllstoffe, Stabilisatoren, Netzmittel, Dispergierhilfsmittel, Verlaufmittel, Entschäumer und Katalysatoren einzeln oder im Gemisch in den üblichen Mengen enthalten. Als üblicher Zusatz E) kann auch CAB verwendet werden. Es dient in der erfindungsgemäßen Bindemittelmischung aber nicht als Bindemittel, sondern als Verlaufmittel. Diese Substanzen können den Einzelkomponenten und/oder der Gesamtmischung zugesetzt werden. Als übliche Zusätze kommen auch andere Harze, z.B. zur Beschleunigung der Reaktivität in Frage, wie Aminharz, insbesondere Melaminharz, z.B. in Mengen von 1 - 20 Gew.-%, bezogen auf die anderen Bindemittel.

Geeignete Füllstoffe sind z.B. Talkum, Glimmer, Kaolin, Kreide, Quarzmehl, Schiefermehl, Bariumsulfat, verschiedene Kieselsäuren, Silikate, Glasfasern, organische Fasern oder dergleichen.

Der Festkörpergehalt der Bindemittelmischung, d.h. des Metallic-Basis-Lackes kann sehr hoch eingestellt werden. Im

allgemeinen beträgt er 5 - 50, vorzugsweise 15 - 40, im besonderen 20 - 35 Gew.-%.

Die Schichtdicken der einzelnen Lacküberzüge betragen beim Basislack im allgemeinen 10 - 40, vorzugsweise 15 - 25 /um, während die Deckschicht im allgemeinen Stärken von 20 - 70, vorzugsweise 30 - 50 /um aufweist.

Bei der Herstellung der Metallic-Lackschichten wird die Bindemittelmischung auf eine vorbereitete Fläche aufgebracht, z. B. auf eine mit einem Füller versehene Automobilkarosserie aufgespritzt, an der Luft getrocknet und anschließend mit einem Decklack überzogen. Beide Schichten werden dann in einem Arbeitsgang, z. B. während 10 - 40 min bei 100 - 180°C eingebrannt, wobei die Temperatur in Relation zu der Einbrennzeit steht.

Als Gegenstände und Flächengebilde, die mit den erfindungsgemäßen Bindemittelmischungen beschichtet werden können, eignen sich z.B. solche aus Metall, Kunststoff, Holz und andere.

In den nachfolgenden Beispielen beziehen sich die Symbole T= Teile und % stets auf das Gewicht. OHZ bedeutet Hydroxylzahl und SZ Säurezahl.

Beispiele

Bindemittelherstellung

1. 90 T eines Polyesters (OHZ 60) aus Phthalsäureanhydrid, Hexandiol-1,6, Neopentylglykol und Trimethylolpropan wurden mit 45 Teilen eines technischen Bisanhydrids (SZ 485), wie es durch Umsetzung von 2 Mol Trimellithsäureanhydrid und 1 Mol 1,2-Propandiol und nachfolgende Umlagerung erhalten wurde, dessen Hauptbestandteil die Verbindung der Formel (VI) (s. Formelblatt) war, und 30 T Methyläthylketon bei 100 bis 110°C erhitzt, bis eine Säurezahl von 134 erreicht war. Danach wurden 14 T Wasser zugegeben und weitere 2 Stunden bei 100°C gerührt.

Nach dem Abkühlen auf 60 bis 65°C wurden 144 T Äthylenglykolmonoäthyläther zugefügt und bis zur homogenen Lösung gerührt. In die klare Lösung wurden 84 T eines epoxidierten Sojaöls (Epoxyäquivalent 260) eingerührt, bis das Reaktionsgemisch eine Säurezahl von 65 erreicht hatte. Nach Abkühlung auf 50°C wurden 16 T N,N-Dimethylaminoäthanol eingebracht. Anschließend wurde bei Raumtemperatur das Reaktionsgemisch mit weiteren 50 T Äthylenglykolmonoäthyläther versetzt. Ausbeute: 440 T einer klaren Harzlösung, ca. 55 % Festkörpergehalt, Viskosität 550 mPa.s/20°C.

2. 203 T des im Beispiel 1 verwendeten Polyesters (OHZ 60) wurden mit 87 T eines Copolymeren (OHZ 69) aus Styrol, Methylmethacrylat, Hydroxyäthylacrylat und n-Butylacrylat und 150 T des im Beispiel 1 genannten technischen Bis-Anhydrids in Gegenwart von 50 T Xylol bei 130°C bis zur SZ 150 umgesetzt. Nach der Zugabe von 12 T Wasser bei 120°C wurde 2 Stunden gerührt, dann die Temperatur auf 80°C gesenkt und ein Gemisch von 319 T Butanol und 368 T Xylol eingebracht. Dabei erfolgte die Temperaturführung in der Weise, daß nach Beendigung der Lösungsmittelzugabe die Temperatur auf 70°C abgesenkt war. 246 T eines Gemisches aus epoxidiertem Sojaöl und epoxidiertem Leinöl (Mischungsverhältnis 76,1 : 23,9 Gew.-%, mittl. Epoxidäquivalent 239) wurden bei dieser Temperatur zugesetzt. Nach 1 Stunde betrug die Säurezahl 68, worauf die Zugabe einer Mischung aus 51 T Triäthylamin und 10 T Butanol erfolgte. Ausbeute: 1470 T einer klaren Harzlösung, 50 % Festkörpergehalt, Viskosität 400 mPa.s/20°C.

3. 263 T eines Copolymeren (OHZ 71) aus Styrol, Vinyltoluol, Methylmethacrylat, Butylmethacrylat, Hydroxypropyl- und Hydroxyäthylacrylat wurden mit 150 T des im Beispiel 1 genannten technischen Bis-Anhydrids und 350 T Xylol bei 120°C gerührt, bis die Säurezahl 141 betrug. Nach langsamer Zugabe von 12 T Wasser wurde bei 100°C 2 Stunden hydrolysiert und unter Abkühlung auf

60$^{o}$C 349 T n-Butanol zugesetzt. Innerhalb 20 Minuten wurden 178 g epoxidiertes Leinöl (Epoxidäquivalent 172) zugegeben. Nach 3 Stunden hatte das Reaktionsgemisch die Säurezahl 77. Nach Kühlung wurde eine Mischung aus 20 T Triäthylamin und 32 T N,N-Dimethylaminoäthanol, gelöst in 347 T Butanol, rasch zugesetzt. Ausbeute: 1380 T einer klaren Harzlösung, Viskosität 2800 mPa.s/20$^{o}$C, Festkörpergehalt ca. 49 %.

Unter dem in den Beispielen 1 bis 3 genannten technischen Bis-Anhydrid ist nach der gelpermeationschromatographischen Analyse ein Produkt der Zusammensetzung 73 % Bis-Anhydrid (Formel (VI)), 19 Gew.-% oligomeres Bis-Anhydrid der folgenden allgemeinen Formel (V), worin t=1 und n=1 bis ca. 6 ist bzw. Stellungsisomere und 9 Gew.-% Trimellithsäureanhydrid zu verstehen.

4 a) Herstellung eines Metallic-Basislackes

80 T einer 55 %igen Lösung eines Kondensationsproduktes gemäß Beispiel 1 wurden mit 0,8 T hochdisperser Kieselsäure, 10,4 T Aluminiumpaste (Metallgehalt 65 %, Lösungsmittel: Testbenzin, Solventnaphtha, durchschnittliche Teilchengröße nach DIN 4190 20 $\mu$m, spezifisches Gewicht 1,5), 0,1 T Lecithin und 8,7 T Xylol zu einem Lack verarbeitet. Durch Zugabe von etwa 65 T Xylol wurde dieser Basislack auf eine zum Spritzen geeignete Auslaufzeit (DIN-Becher mit Düse 4 mm nach DIN 53211, 20$^{o}$C) von 18 s verdünnt. Dabei resultierte ein Festkörpergehalt von 30 % (4 g, 1 h, 120$^{o}$C). Der Basislack wurde mit einer Trockenfilmstärke von 15 $\mu$m auf einen Automobilfüller aufgespritzt, wobei als Substrat Stahlblech verwendet wurde.

b) Klarlack für Zweischicht-Metallic-Lackierung

56,6 T handelsübliches fremdvernetzendes Acrylharz, (65 %ig, gelöst in Xylol/Butanol, Verhältnis 3 : 1, dynamische Viskosität (50 %ig in Xylol) 1140 mPa.s/20$^{o}$C, SZ 13, bezogen auf Festharz), 28,7 T mit Isobutanol partiell veräthertes

Melaminharz (ca. 55 %ig in Isobutanol/Xylol 44 : 1, Molverhältnis Melamin : Formaldehyd = 1 : 4, veräthert mit 3 Mol Isobutanol, dynamische Viskosität (55 % in Butanol) 500 mPa.s/20°C) als Härterkomponente, 1,5 T eines aromatischen Kohlenwasserstoffgemisches vom Siedebereich 180 - 200°C, 5,3 T Isobutanol und 9,7 T Xylol wurden gemischt. Dieser Klarlack wurde mit einem Kohlenwasserstoffgemisch vom Siedebereich 150 - 180°C auf eine Spritzkonsistenz (DIN-Becher mit Düse 4 mm nach DIN 53 211) von 30 s bei 20°C eingestellt und in einer Trockenfilmstärke von 40 µm aufgebracht.

Beide Schichten wurden in einem Arbeitsgang in 20 Minuten bei 140°C eingebrannt.

5. Beispiel 4 wurde mit dem Unterschied wiederholt, daß anstelle von 10,4 T Aluminiumpaste nur 6,6 T Aluminiumpaste und 3,2 T eines Kupferphthalocyaninpigments der reinen ß-Modifikation (Dichte 1,6 $g/cm^3$, spezifische Oberfläche 57 $m^2/g$, mittlere Teilchengröße 0,66 µm) eingesetzt wurden.

6. Beispiel 4 wurde mit dem Unterschied wiederholt, daß anstelle von 10,4 T Aluminiumpaste nur 6,6 Aluminiumpaste und 3,2 T eines Benzimidazolonpigmentes (Dichte 1,5 $g/cm^3$, spezifische Oberfläche 17,5 $m^2/g$, mittlere Teilchengröße 0,23 µm) eingesetzt wurden.

7. Beispiel 4 wurde mit dem Unterschied wiederholt, daß durch erhöhte Zugabe von 220 T Xylol ein Basislack mit nur 15 % Festkörpergehalt und einer Auslaufzeit von 16 s bei 20°C erhalten wurde.

Nach Beispiel 5 und 6 erhielt man farbige Metallic-Überzüge mit gleich guten Eigenschaften wie nach Beispiel 4. Die eingebrannten Überzüge nach Beispiel 7 zeigten ebenfalls keinen Unterschied zum Beispiel 4.

Vergleichsbeispiele

1. (Handelsüblicher, dem Stand der Technik entsprechender Basis-Metallic-Lack)

14,6 T einer 70 %igen Lösung eines ölfreien Polyesters, 1,0 T hochdisperse Kieselsäure, 0,1 T Sojalecithin, 54,2 T einer 18 %igen Lösung von Celluloseacetobutyrat in Butylacetat, 4,6 T eines 55 %igen handelsüblichen butylierten Melaminharzes, 2,5 T eines handelsüblichen Carbamidsäureharzes, 6,5 T Aluminiumpaste (Metallgehalt 65 %, Lösungsmittel: Testbenzin, Solventnaphtha. Durchschnittliche Teilchengröße nach DIN 4190 20 /um, spezifisches Gewicht 1,5), 3,5 T Äthylenglykolmonobutyläther, 1,5 T Dekahydronaphtalin, 9 T Xylol und 2,5 T Butylacetat wurden zu einem Lack verarbeitet. Durch Zugabe von 85 T Xylol wurde der Basislack auf eine zum Spritzen geeignete Auslaufzeit (DIN-Becher mit Düse 4 mm nach DIN 53 211, 20°C) von 15 s verdünnt. Dabei resultierte ein Festkörpergehalt von 15 % (4 g, 1 h, 120°C). Der Basislack wurde mit einer Trockenfilmstärke von 15 /um auf einen Automobilfüller aufgespritzt (Substrat Stahlblech). Nach einer Ablüftungszeit von 5 Minuten wurde ein Klarlack derselben Zusammensetzung wie bei Beispiel 4b aufgespritzt und beide Schichten in einem Arbeitsgang 20 Minuten bei 140°C eingebrannt.

2. Vergleich 1 wurde wiederholt, jedoch wurde nicht mit 85 T Xylol verdünnt. Dabei resultierte ein Lack mit einem Festkörpergehalt von 30 % (4 g, 1 h, 120°C) und einer Auslaufzeit (DIN-Becher mit Düse 4 mm nach DIN 53 211, 20°C) von 33 s. Die weitere Verarbeitung erfolgte wie im Vergleich 1.

In der Tabelle werden das Verhalten und die Eigenschaften der nach den Beispielen 4 und 7 (Erfindung) sowie Vergleich 1 und 2 erhaltenen Lacke und Lackschichten aufgeführt. Die

Beurteilung der eingebrannten Lackierung erfolgte visuell, eine Norm besteht nicht. Die Steinschlagfestigkeit wurde in Anlehnung an die geltenden Spezifikationen der deutschen Autoindustrie durchgeführt, indem man scharfkantigen Stahlschrot unter Verwendung von Druckluft auf das Prüfblech aufprallen ließ. Die erhaltenen Resultate wurden mit einer Typskala verglichen.

**T a b e l l e**

| | Beispiel 4 | Beispiel 7 | Vergleich 1 | Vergleich 2 |
|---|---|---|---|---|
| Festkörpergehalt | 30 % | 15 % | 15 % | 30 % |
| Auftrag durch Spritzen | kein Ablaufen | kein Ablaufen | kein Ablaufen | Ablaufen, "Gardinenbildung" |
| Beurteilung der eingebrannten Zweischichtlackierung | einwandfreie Metalleffektlackierung mit hohem Glanz und guter Zwischenhaftung | dto | einwandfreie Metalleffektlackierung mit hohem Glanz aber sehr schlechter Zwischenhaftung | Filmdefekte wie Kochblasen, Kraterbildung wolkiger (Flopp-)Effekt, starkes Anlösen des Basislackes und Ausschwimmen der Aluminiumteilchen in die Decklackschicht, im Glanz deutlich schlechter als Beispiel 1, sehr schlechte Zwischenhaftung |
| Steinschlagfestigkeit | KW 1 - 2 | KW 1 - 2 | KW 6 - 7 | KW 6 - 7 |

KW = Kennwert 0 = bester Wert 10 = schlechtester Wert

Formelblatt

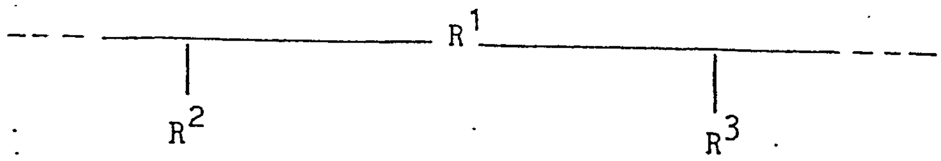

(I)

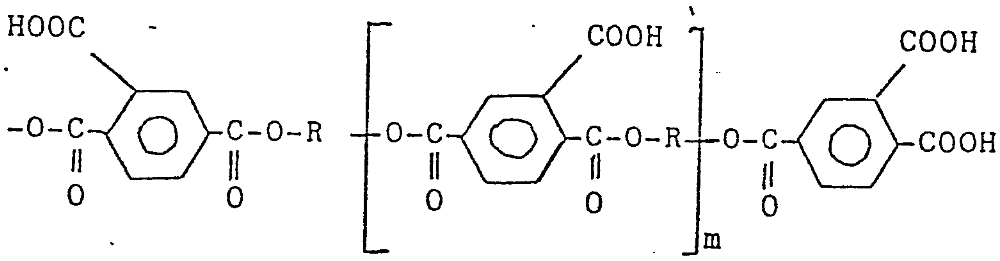

(II)

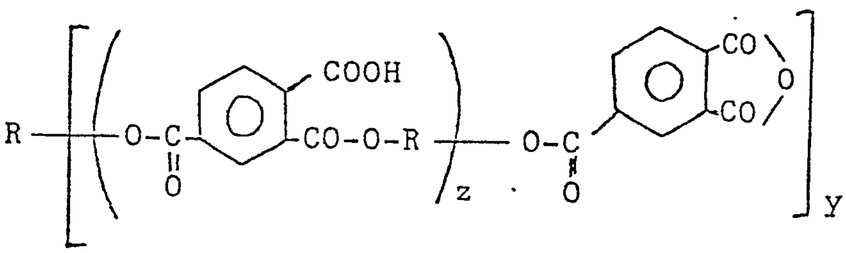

(III)

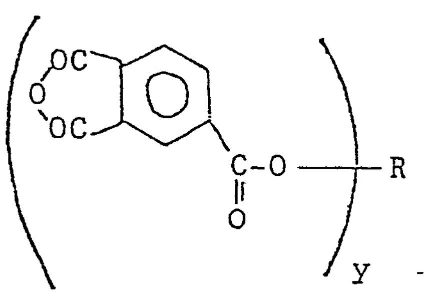

(IV)

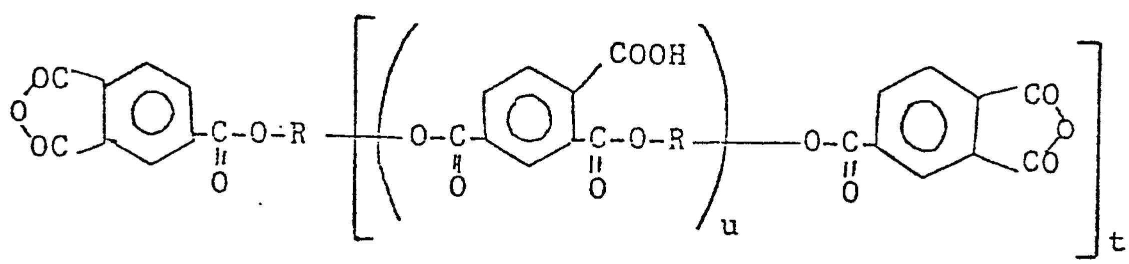

(V)

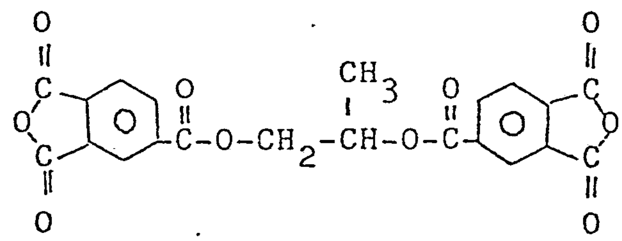

(VI)

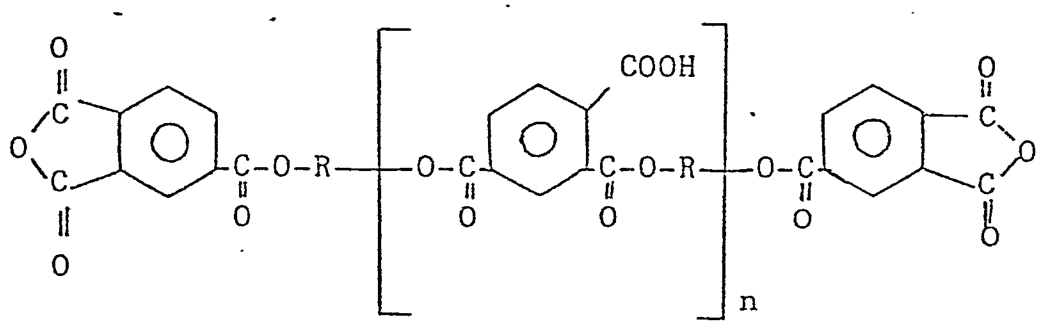

(VII)

n= 1 bis ca. 6

Patentansprüche:

1. Bindemittelmischung zur Herstellung von wasserfreien, festkörperreichen Basis-Metallic-Lacken auf Basis

A) eines Reaktionsproduktes aus
   a) mindestens einem, seitlich angeordnete OH-Gruppen enthaltenden, gesättigten oder olefinisch-ungesättigten Polyester und/oder Polymerisationsprodukt jeweils mit einer OH-Zahl von 30 ÷ 180,
   b) einem Trimellithsäureeinheiten enthaltenden Polycarbonsäureanhydridgemisch, wobei das Festkörperverhältnis der Komponente a) zu b) 50 : 50 bis 90 : 10 beträgt,
   c) mindestens einem epoxidierten Öl und
   d) mindestens einer organischen Base,

B) Metallpulver,

C) Lösungsmittel,

D) gegebenenfalls Pigmente und/oder Farbstoffe sowie

E) gegebenenfalls weiteren üblichen Zusätzen, mit der Maßgabe, daß ein Gehalt an Celluloseacetobutyrat höchstens 3 %, bezogen auf den Feststoffgehalt beträgt.

2. Bindemittelmischung nach Anspruch 1, dadurch gekennzeichnet, daß die Komponente a) Hydroxylzahlen von 50 bis 130 und die Komponente c) Epoxyäquivalente von 100 bis 360, vorzugsweise von 150 bis 275 besitzen.

3. Bindemittelmischung nach Anspruch 1 oder 2, dadurch gekennzeichnet, daß die Komponente B) wenigstens überwiegend Aluminiumpulver ist.

4. Bindemittelmischung nach einem oder mehreren der Ansprüche 1 bis 3, dadurch gekennzeichnet, daß die Komponente B) in Mengen von 0,1 bis 50, vorzugsweise 0,8 bis 15 und insbesondere 1 bis 8 Gew.-%, bezogen auf Bindemittel, enthalten ist.

5. Bindemittelmischung nach einem oder mehreren der Ansprüche 1 bis 4, dadurch gekennzeichnet, daß das Festkörpergewichtsverhältnis der Komponente a) zu Komponente b) 60 : 40 bis 85 : 15 beträgt.

6. Bindemittelmischung nach einem oder mehreren der Ansprüche 1 bis 5, dadurch gekennzeichnet, daß sie einen Festkörpergehalt von 5 bis 50, vorzugsweise 15 bis 40 insbesondere 20 bis 35 Gew.-% aufweist.

7. Verwendung der Bindemittelmischung nach einem oder mehreren der Ansprüche 1 bis 6 zur Herstellung einer Zweischichten-Metallic-Lackierung aus einem festkörperreichen Basislack und einem Decklack.

8. Verwendung nach Anspruch 7, dadurch gekennzeichnet, daß die Basislackschicht mit Zweikomponentenlacken, Einbrennlacken oder Pulverlacken als Decklack überlackiert wird.